# EUROPEAN PATENT APPLICATION

(11) **EP 4 844 882 A1**
(43) Date of publication of application: **25.11.2026**
(21) Application number: 24918444.1
(22) Date of filing: 26.12.2024
(51) Int. Cl.: H01M 10/0587, H01M 10/04, H01M 50/107, H01M 50/167

(54) **SEALED BATTERY AND METHOD FOR MANUFACTURING SEALED BATTERY**

(30) Priority: 19.01.2024 JP 2024006515
(71) Applicant: Panasonic Intellectual Property Management Co., Ltd., Kadoma-shi, Osaka 571-0057 (JP)
(72) Inventor: OKIMOTO, Ryota, Kadoma-shi, Osaka 571-0057 (JP)
(74) Representative: Eisenführ Speiser
(86) International application number: PCT/JP2024/046120
(87) International publication number: WO 2025/154533

(57) **Abstract**

A battery (10) is provided with: an electrode body (14) in which a positive electrode (11) and a negative electrode (12) are wound via a separator (13); an electrolyte; a bottomed cylindrical outer can (20) that accommodates the electrode body and the electrolyte; a sealing body (21) that closes an opening end (20B) of the outer can (20); and an annular gasket (19) that is located between the outer can (20) and the sealing body (21). The sealing body (21) is crimped and fixed to the opening end (20B) of the outer can (20) via the gasket (19). A laser irradiation unit (22) is formed in a shoulder (20D) that is formed by crimping the opening end (20B) of the outer can (20) so as to bent inward in the radial direction.

## Description

### TECHNICAL FIELD

The present invention relates to a sealed battery and a method for manufacturing the sealed battery.

### BACKGROUND ART

As a sealed battery, a cylindrical battery is known, for example. The cylindrical battery includes, for example, an electrode assembly, a bottomed cylindrical housing can that houses the electrode assembly, a sealing assembly that seals an opening end portion of the housing can, and a gasket provided between the housing can and the sealing assembly. In such a cylindrical battery, the sealing assembly is crimped and fixed to the opening end portion of the housing can with the gasket therebetween (Patent Literature 1, for example).

### CITATION LIST

### PATENT LITERATURE

PATENT LITERATURE 1: Japanese Unexamined Patent Application Publication No. 2000-306557

### SUMMARY

In the aforementioned crimping and fixing, a shoulder portion, which is bent radially inward by crimping the opening end portion of the housing can, is formed. Tensile stress at the time of crimping may act on an inner part in the thickness of the shoulder portion, causing the tensile stress to remain. This may reduce the reliability of the sealed battery.

Accordingly, it is an advantage of the present disclosure to provide a sealed battery capable of relaxing residual tensile stress on a shoulder portion of a housing can and a method for manufacturing the sealed battery.

A sealed battery according to the present disclosure comprises: an electrode assembly of a positive electrode and a negative electrode that are wound with a separator between the electrodes; an electrolyte solution; a bottomed cylindrical housing can that houses the electrode assembly and the electrolyte solution; a sealing assembly that seals an opening end portion of the housing can; and an annular gasket interposed between the housing can and the sealing assembly, the sealing assembly being crimped and fixed to the opening end portion of the housing can with the gasket therebetween, wherein a laser irradiated portion is formed in a shoulder portion that is bent radially inward by crimping the opening end portion of the housing can.

A method for manufacturing a sealed battery according to the present disclosure is a method for manufacturing a sealed battery, the sealed battery comprising an electrode assembly of a positive electrode and a negative electrode that are wound with a separator between the electrodes, an electrolyte solution, a bottomed cylindrical housing can that houses the electrode assembly and the electrolyte solution, a sealing assembly that seals an opening end portion of the housing can, and an annular gasket interposed between the housing can and the sealing assembly, the method comprising: crimping and fixing the sealing assembly to the opening end portion of the housing can with the gasket therebetween; and irradiating a shoulder portion that is bent radially inward by crimping the opening end portion of the housing can with a laser.

According to the sealed battery and the method for manufacturing the sealed battery of the present disclosure, it is possible to relax the residual tensile stress on the shoulder portion of the housing can.

### BRIEF DESCRIPTION OF DRAWING

FIG. 1 is an axial sectional view of a sealed battery as one example of an embodiment.
FIG. 2 is an axial sectional view of a shoulder portion of a housing can in FIG. 1.
FIG. 3 is a flowchart showing a method for manufacturing a sealed battery as one example of an embodiment.
FIG. 4 is a schematic view showing a sealing (crimping) step in FIG. 3.
FIG. 5 is a schematic view showing a laser irradiation step in FIG. 3.

### DESCRIPTION OF EMBODIMENTS

Hereinafter, examples of the embodiments of the present disclosure will be described in detail. In the following description, specific shapes, materials, directions, numerical values, and the like are merely examples for easy understanding of the present disclosure, and therefore can appropriately be changed in accordance with applications, purposes, specifications, and the like.

### [Sealed Battery]

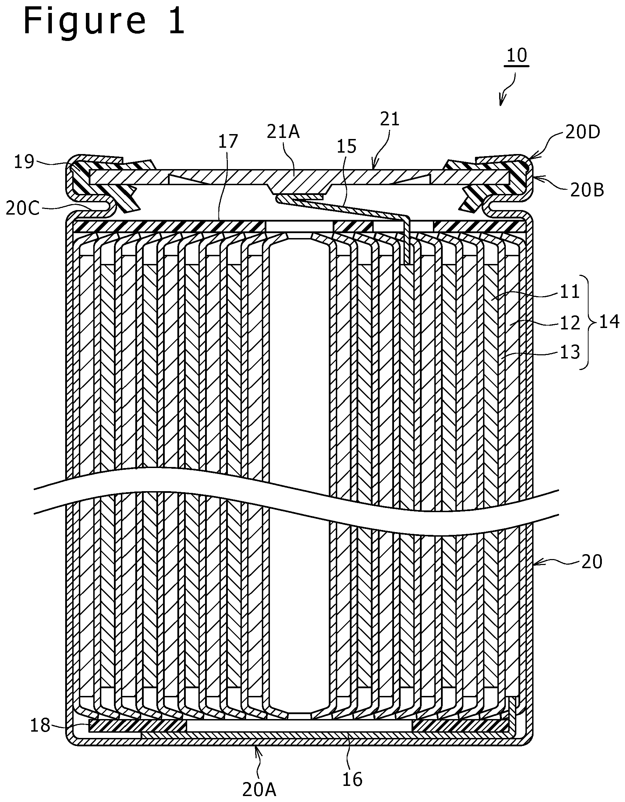

With reference to FIG. 1, a battery 10 as an example of the embodiment will be described.

The battery 10 as a sealed battery is a non-aqueous electrolyte secondary battery (lithium-ion battery) using non-aqueous electrolyte. However, the sealed battery of the present disclosure is not limited to the non-aqueous electrolyte secondary battery of the present embodiment, and may be a primary battery or a battery using aqueous electrolyte. In addition, the battery 10 is a cylindrical battery. However, the sealed battery of the present disclosure is not limited to the cylindrical battery of the present embodiment, and may be a prismatic battery, a button battery, or a coin battery.

Hereinafter, each member may be described using the axial, radial and circumferential directions of the battery 10. In addition, the side of a sealing assembly 21 in an axial direction (height direction) of the battery 10 may be defined as "upper side", and the side of a bottom portion 20A of a housing can 20 in the axial direction may be defined as "lower side".

As shown in FIG. 1, the battery 10 comprises an electrode assembly 14, non-aqueous electrolyte, the bottomed cylindrical housing can 20 that houses the electrode assembly 14 and the electrolyte, and the sealing assembly 21 that seals an opening of the housing can 20. The electrode assembly 14, which includes a positive electrode 11, a negative electrode 12, and separators 13 interposed between the positive electrode 11 and the negative electrode 12, has a wound structure with the positive electrode 11 and the negative electrode 12 wound with the separators 13 between the electrodes. The housing can 20 is a bottomed cylindrical container having the bottom portion 20A and an opening end portion 20B.

The electrode assembly 14 includes the long-shaped negative positive electrode 11, the long-shaped negative electrode 12, and the two long-shaped separators 13. The electrode assembly 14 includes, as the electrode leads, a positive electrode lead 15 joined to the positive electrode 11 and a negative electrode lead 16 joined to the negative electrode 12. In order to restrain lithium deposition, the negative electrode 12 is formed with a dimension slightly larger than the positive electrode 11. For this reason, the lower end of the negative electrode 12 is arranged closer to the bottom portion 20A of the housing can 20 than the lower end of the positive electrode 11. The two separators 13 are formed with a dimension at least slightly larger than the positive electrode 11 and are arranged, for example, to hold the positive electrode 11 therebetween.

The positive electrode 11 includes a positive electrode core, and a positive electrode mixture layer formed on both the surfaces of the positive electrode core. For the positive electrode core, there may be used a metal foil that is stable in a potential range of the positive electrode 11, such as aluminum or an aluminum alloy, a film with the metal arranged on its surface layer, or the like. The positive electrode mixture layer contains a positive electrode active material, a conductive agent such as acetylene black, and a binding agent such as polyvinylidene fluoride (PVDF). The positive electrode 11 can be fabricated by coating the positive electrode core with positive electrode mixture slurry containing a positive electrode active material, a conductive agent, a binding agent, or the like, drying the coating, and then compressing it to form a positive electrode mixture layer on both the surfaces of the positive electrode core.

For the positive electrode active material, a lithium-transition metal composite oxide is used, for example. Examples of metal elements contained in the lithium-containing metal composite oxide may include Ni, Co, Mn, Al, B, Mg, Ti, V, Cr, Fe, Cu, Zn, Ga, Sr, Zr, Nb, In, Sn, Ta, and W. Suitable examples of the lithium-transition metal composite oxide include a lithium metal composite oxide containing at least one of the groups consisting of Ni, Co, and Mn. Specific examples may include a composite oxide containing Ni, Co, and Mn, and a composite oxide containing Ni, Co and Al.

The negative electrode 12 includes a negative electrode core and a negative electrode mixture layer provided on both the surfaces of the negative electrode core. For the negative electrode core, there may be used a metal foil that is stable in a potential range of the negative electrode 12, such as copper, and copper alloy, a film with the metal arranged on its surface layer, or the like. The negative electrode mixture layer contains a negative electrode active material, and a binding agent such as styrene-butadiene rubber (SBR). The negative electrode 12 can be fabricated by coating the negative electrode core with negative electrode mixture slurry containing a negative electrode active material, a binding agent, or the like, drying the coating, and then compressing it to form a negative electrode mixture layer on both the surfaces of the negative electrode core.

For the negative electrode active material, there is used, for example, graphite including natural graphite such as flake graphite, massive graphite, and earthy graphite, and artificial graphite such as massive artificial graphite, and graphitized mesophase carbon microbeads. For the negative electrode active material, there may be used metals that alloy with lithium such as Si and Sn, or alloys containing the metals, and compounds containing these metals, or they may be used with graphite. Suitable examples of such active materials include Si-containing materials in which Si particles are dispersed in an SiO₂ phase, a silicate phase such as lithium silicate, or an amorphous carbon phase.

For the separators 13, a porous sheet with ion permeability and insulation properties is used, for example. Specific examples of the porous sheet may include microporous thin films, woven fabrics, and non-woven fabrics. As the material of the separators 13, olefinbased resin such as polyethylene and polypropylene, and cellulose are suitable. The separators 13 may be a laminate having a cellulose fiber layer and a thermoplastic resin fiber layer made of olefin resin or the like. The separators 13 may also be multi-layer separators containing a polyethylene layer and a polypropylene layer, and may also have a material, such as aramid-based resin and ceramic, coated on the surface of the separator 13.

The non-aqueous electrolyte includes, for example, non-aqueous solvent and electrolyte salt solved in the non-aqueous solvent. For the non-aqueous solvent, there may be used esters, ethers, nitriles, amides, and mixed solvent of two or more of these. The non-aqueous solvents may contain a halogen substituted product in which at least some of hydrogen in these solvents is substituted with halogen atoms such as fluorine. Here, the non-aqueous electrolyte is not limited to liquid electrolyte, and may be solid electrolyte using gel like polymers or the like. For the electrolyte salt, lithium salt such as LiPF₆ is used.

An upper insulating plate 17 and a lower insulating plate 18 are provided above and below the electrode assembly 14, respectively. In the example shown in FIG. 1, the positive electrode lead 15 attached to the positive electrode 11 extends toward the sealing assembly 21 through an opening portion of the upper insulating plate 17, and the negative electrode lead 16 attached to the negative electrode 12 extends toward the bottom portion 20A of the housing can 20 along the outside of the lower insulating plate 18. The positive electrode lead 15 is connected by welding or the like to the inner surface of a valve portion 21A of the sealing assembly 21 that faces the inner side of the housing can 20, so that sealing assembly 21 serves as a positive electrode terminal. The negative electrode lead 16 is connected by welding or the like to the inner surface of the bottom portion 20A of the housing can 20, so that the housing can 20 serves as a negative electrode terminal.

Between the housing can 20 and the sealing assembly 21, a gasket 19 is provided to ensure the sealability inside the battery and the insulation between the housing can 20 and the sealing assembly 21. The housing can 20 includes the opening end portion 20B, an annular grooved portion 20C along the circumferential direction, and an annular shoulder portion 20D. The grooved portion 20C is formed by recessing the opening end portion 20B inward in the radial direction by a spinning process. The shoulder portion 20D is formed when the opening end portion 20B is bent radially inward and crimped to a circumferential edge portion of the sealing assembly 21. Due to the crimping, the sealing assembly 21 is held between the shoulder portion 20D and the grooved portion 20C with the gasket 19 therebetween and fixed to the housing can 20.

The sealing assembly 21 is a disc-shaped member comprising an exhaust valve. The sealing assembly 21 has the valve portion 21A that breaks when an internal pressure of the battery exceeds a predetermined threshold. The valve portion 21A includes a lower projection provided at a radially center portion so as to project to the inside of the battery, and a thin-walled portion formed around the lower projection. The thickness of the thin-walled portion is smaller toward the outer side in the radial direction. When the internal pressure of the battery 10 rises at the time of abnormality, the thin-walled portion breaks and forms a gas outlet.

### [Shoulder Portion of Housing Can]

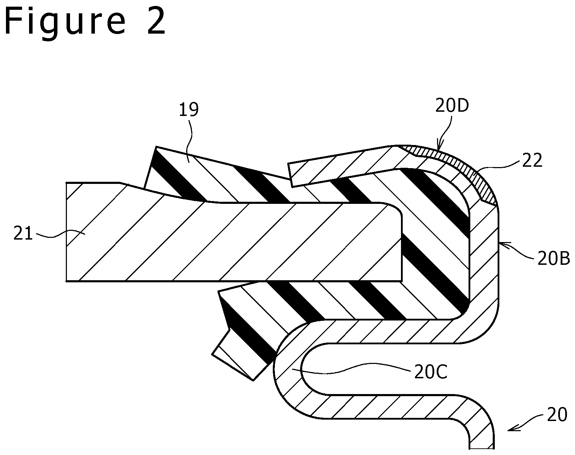

With reference to FIG. 2, the shoulder portion 20D of the housing can 20 will be described.

As shown in FIG. 2, the housing can 20 has the shoulder portion 20D that is bent radially inward by crimping the opening end portion 20B as described above. In other words, the shoulder portion 20D is a bent portion formed by crimping the opening end portion 20B. The shoulder portion 20D is formed in a region, which is an axial upper portion and a radial outer portion of the housing can 20, over the entire circumference of the housing can 20 along the circumferential direction. In the shoulder portion 20D, a laser irradiated portion 22 is formed as will be described later.

The laser irradiated portion 22 is a region of the shoulder portion 20D irradiated with laser from the outside (the outer side of the housing can 20). The laser irradiated portion 22 can relax the residual tensile stress on the shoulder portion 20D of the housing can 20 as will be described later. The laser irradiated portion 22 is formed in a region, which is an axial upper portion and a radial outer portion of the housing can 20, over the entire circumference of the housing can 20 in the circumferential direction. In other words, the laser irradiated portion 22 is formed over the entire region of the shoulder portion 20D.

The laser irradiated portion 22 may be formed in a spot configuration at equal intervals along the shoulder portion 20D. In this case, a region of the shoulder portion 20D where the laser irradiated portion 22 is formed along the circumferential direction is preferably larger than a region where the laser irradiated portion 22 is not formed.

The laser irradiated portion 22 is formed in a range from the outer surface of the shoulder portion 20D (the surface of the housing can 20 facing outside) to half the thickness of the shoulder portion 20D. As a result, the inner surface of the shoulder portion 20D, which is in contact with the gasket 19 (the surface of the housing can 20 facing inside), is less affected by heat from laser irradiation, which makes it possible to avoid damage to the gasket 19 due to the laser irradiation.

Here, as described above, the sealing assembly 21 is held between the shoulder portion 20D and the grooved portion 20C with the gasket therebetween 19 and be crimped and fixed to the housing can 20. At this time, tensile stress of crimping may act on an inner part in the thickness of the shoulder portion 20D (hereinafter the inner part of the shoulder portion 20D), causing the tensile stress to remain. This may reduce the reliability of the battery 10.

Therefore, by forming the laser irradiated portion 22 in the shoulder portion 20D, the tensile stress acts on an outer part in the thickness of the shoulder portion 20D (hereinafter, the outer part of the shoulder portion 20D) during laser irradiation. Meanwhile, compressive stress acts on the inner part of the shoulder portion 20D during laser irradiation, which makes it possible to relax the residual tensile stress at the time of crimping. As a result, the reliability of the battery 10 can be enhanced.

### [Manufacturing Step of Sealed Battery]

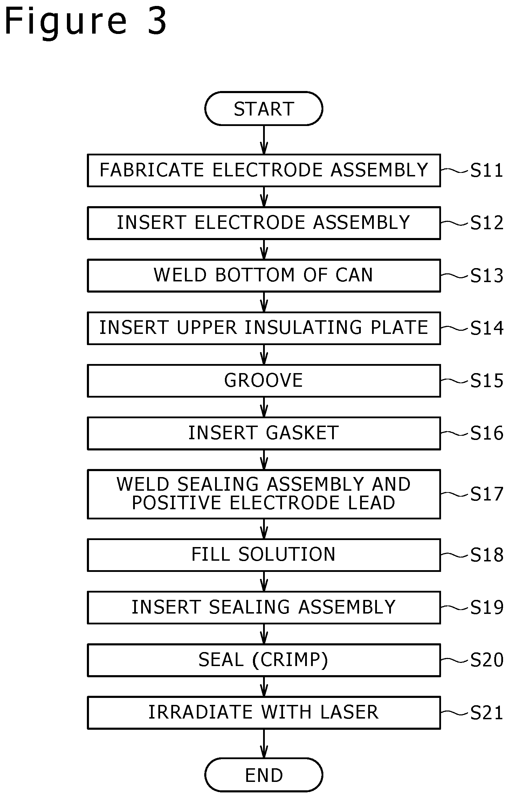

With reference to FIGS. 3 to 5, a manufacturing step of the battery 10 will be described. In the following description, FIG. 1 may be referenced as appropriate.

In step S11, the positive electrode 11 and the negative electrode 12 are wound in a spiral form with the separators 13 between the electrodes to fabricate the electrode assembly 14. In step S12, the electrode assembly 14 is inserted together with the lower insulating plate 18 into the bottomed cylindrical housing can 20 that is fabricated by drawing a steel plate. In step S13, the inner surface of the bottom portion 20A of the housing can 20 is welded to the negative electrode lead 16.

In step S14, the upper insulating plate 17 is inserted into the housing can 20. In step S15, a region of the opening end portion 20B of the housing can 20 above the upper insulating plate 17 is grooved to form the grooved portion 20C. In step S16, the gasket 19 is inserted into the grooved portion 20C. In step S17, the sealing assembly 21 and the positive electrode lead 15 are welded. In step S18, electrolyte is inserted into the housing can 20. In step S19, the sealing assembly 21 is inserted into the opening end portion 20B of the housing can 20.

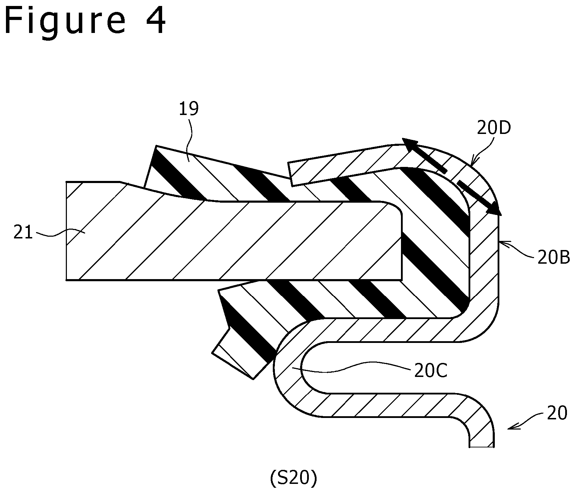

In step S20, the sealing assembly 21 is crimped and fixed to the opening end portion 20B of the housing can 20 with the gasket therebetween 19. As shown in FIG. 4, the shoulder portion 20D is formed by bending the opening end portion 20B radially inward by the crimping and fixing. At this time, tensile stress acts on the inner part of the shoulder portion 20D (solid arrow in FIG. 4). When the tensile stress remains in the inner part of the shoulder portion 20D, the reliability of the battery 10 may be reduced.

In step S21, the laser irradiated portion 22 is formed by irradiating the shoulder portion 20D with laser from the outside. At this time, laser irradiation is preferably performed such that the outer surface temperature of the shoulder portion 20D is in the range of 50°C to 200°C. In addition, the laser irradiated portion 22 is preferably formed in the range from the outer surface of the shoulder portion 20D to half the thickness of the shoulder portion 20D. As a result, the inner surface of the shoulder portion 20D, which is in contact with the gasket 19, is less affected by heat from laser irradiation, which makes it possible to avoid damage to the gasket 19 due to the laser irradiation.

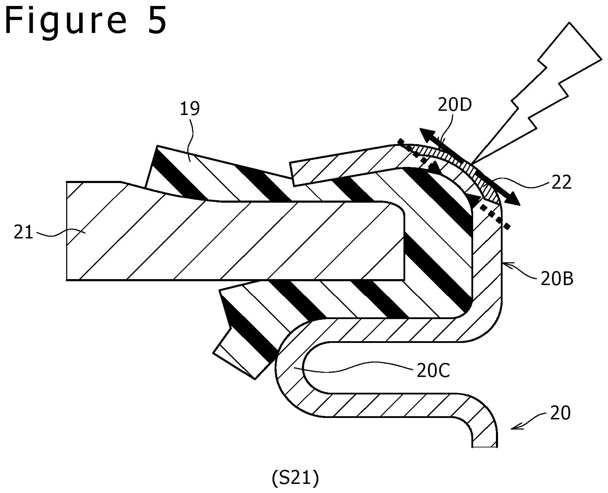

In step S21, as shown in FIG. 5, tensile stress (solid arrow in FIG. 5) acts on the outer part of the shoulder portion 20D by laser irradiation, and compressive stress (dashed arrow in FIG. 5) acts on the inner part of the shoulder portion 20D. This makes it possible to relax the residual tensile stress in the inner part of the shoulder portion 20D that is generated in step S20. As a result, the reliability of the battery 10 can be enhanced.

Note that the present disclosure is not limited to the embodiments and modifications described above, and various modifications and changes are possible within the matters described in the scope of the Claims of the present application.

### REFERENCE SIGNS LIST

10 Battery (sealed battery), 11 Positive electrode, 12 Negative electrode, 13 Separator, 14 Electrode assembly, 15 Positive electrode lead, 16 Negative electrode lead, 17 Upper insulating plate, 18 Lower insulating plate, 19 Sealing assembly, 20 Housing can, 20A Bottom portion, 20B Opening end portion, 20C Grooved portion, 20D Shoulder portion, 21 Gasket, 22 Laser irradiated portion

## Claims

1. A sealed battery, comprising:
an electrode assembly of a positive electrode and a negative electrode that are wound with a separator between the electrodes;
an electrolyte solution;
a bottomed cylindrical housing can that houses the electrode assembly and the electrolyte solution;
a sealing assembly that seals an opening end portion of the housing can; and
an annular gasket interposed between the housing can and the sealing assembly,
the sealing assembly being crimped and fixed to the opening end portion of the housing can with the gasket therebetween, wherein
a laser irradiated portion is formed in a shoulder portion that is bent radially inward by crimping the opening end portion of the housing can.

2. The sealed battery according to Claim 1, wherein
the laser irradiated portion is formed in a range from an outer surface of the shoulder portion to half a thickness of the shoulder portion.

3. A method for manufacturing a sealed battery, the sealed battery comprising an electrode assembly of a positive electrode and a negative electrode that are wound with a separator between the electrodes, an electrolyte solution, a bottomed cylindrical housing can that houses the electrode assembly and the electrolyte solution, a sealing assembly that seals an opening end portion of the housing can, and an annular gasket interposed between the housing can and the sealing assembly, the method comprising:
crimping and fixing the sealing assembly to the opening end portion of the housing can with the gasket therebetween; and
irradiating a shoulder portion that is bent radially inward by crimping the opening end portion of the housing can with laser.

4. The method for manufacturing a sealed battery according to Claim 3, wherein laser irradiation is performed such that an outer surface temperature of the shoulder portion is in a range of 50°C to 200°C.
